(19) Europäisches Patentamt
European Patent Office
Office européen des brevets

(11) EP 3 165 342 B1

(12) EUROPÄISCHE PATENTSCHRIFT

(45) Veröffentlichungstag und Bekanntmachung des Hinweises auf die Patenterteilung:
**26.09.2018 Patentblatt 2018/39**

(51) Int Cl.:
***B29C 33/62*** *(2006.01)* ***C10M 173/00*** *(2006.01)*
***B29C 67/24*** *(2006.01)* *B29K 75/00* *(2006.01)*

(21) Anmeldenummer: **16192752.0**

(22) Anmeldetag: **07.10.2016**

# (54) ZUSAMMENSETZUNG, TRENNMITTEL UND SEINE VERWENDUNG BEI DER HERSTELLUNG VON POLYURETHAN-FORMKÖRPERN

COMPOSITION, SEPARATING AGENT AND ITS APPLICATION IN MANUFACTURING POLYURETHANE MOULDED BODIES

COMPOSITION, AGENT DE DÉMOULAGE ET SON UTILISATION POUR LA FABRICATION DE CORPS DE FORMAGE EN POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 EP 15193320**

(43) Veröffentlichungstag der Anmeldung:
**10.05.2017 Patentblatt 2017/19**

(73) Patentinhaber: **Evonik Degussa GmbH**
**45128 Essen (DE)**

(72) Erfinder:
- **Lüthge, Thomas**
  **19086 Consrade (DE)**
- **Kluth, Christian**
  **19243 Wittenburg OT Lehsen (DE)**

(56) Entgegenhaltungen:
**DE-C1- 3 837 351**
**JP-A- 2002 241 691**
**JP-B2- 3 160 980**
**JP-B2- 3 160 980**
**US-A- 5 919 976**

- **L Domeier ET AL: "SANDIA REPORT - Urethane Elastomers: Development of TDI-Free Replacement Materials for EN-7", , 1. September 2000 (2000-09-01), Seiten 0-56, XP055264460, DOI: 10.2172/766630 Gefunden im Internet: URL:http://www.osti.gov/scitech/servlets/purl/766630 [gefunden am 2016-04-12]**
- **"Technical Data Sheet: Poly bd R-45HTLO", , 28. März 2012 (2012-03-28), Seite 1, XP055264288, Gefunden im Internet: URL:http://www.crayvalley.com/docs/TDS/poly-bd-r-45htlo.pdf [gefunden am 2016-04-11]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Zusammensetzungen, die OH-funktionelles Polybutadien und Lösungsmittel aufweisen, sowie deren Verwendung als Trennmittel bei der Herstellung von Polyurethan-Formkörpern oder als Antiquietschmittel bei der Verarbeitung von Polyurethan-Formkörpern.

Es ist bekannt, dass die zur Herstellung von Formkörpern verwendeten Polyurethansysteme gegenüber den verwendeten Formwerkstoffen, üblicherweise thermisch stark leitfähige Werkstoffe wie Metalle, eine starke Adhäsion zeigen. Daher werden bei der Entformung der Polyurethan-Formkörper Trennmittel benötigt, die auf die mit Polyurethanen und/oder der Polyurethanreaktionsmischung in Berührung kommenden Formwandungen, aufgebracht werden.

Solche Trennmittel können z. B. Dispersionen oder Emulsionen von Wachsen, Seifen, Ölen und/oder Siliconen in Lösungsmitteln wie Kohlenwasserstoffen oder Wasser sein.

Nach Aufbringen des Trennmittels auf die Form verdampft das Lösungsmittel und die nichtflüchtigen trennaktiven Substanzen bilden einen dünnen Trennfilm, der gewährleisten soll, dass der Polyurethan-Formkörper nach der Herstellung leicht aus der Form entnommen werden kann.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll, unter anderem auch, um eine gute Beziehbarkeit der fertigen Formteile mit Stoffen oder Leder zu gewährleisten.

Um die Umweltbelastung mit organischem Material zu reduzieren, besteht ein hohes Interesse an Trennmitteln auf wässriger Basis, die frei von flüchtigem organischem Material sind. Die im Markt befindlichen wässrigen Trennmittel zeigen jedoch gegenüber klassischen, organische Lösungsmittel enthaltenden Trennmitteln häufig den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht verflüchtigt und mit den Isocyanatverbindungen des Polyurethansystems Reaktionen eingeht, die zu sehr harten Polyharnstoffverbindungen führen. Dadurch können die Formoberflächen gestört, da es zu einem so genannten Aufbau kommt, von dem sie aufwändig gereinigt werden müssen.

Typische Beispiele wässriger Trennmittel mit guter Entformungswirkung sind beispielsweise beschrieben in DE A 37 42 370 oder DE A 40 20 036. Diese Mittel enthalten als trennwirksame Substanz ungesättigte oligomere oder polymere Kohlenwasserstoffe mit Molekulargewichten von mindestens 500 und Jodzahlen von mindestens 60, besonders bevorzugt flüssiges Polybutadien mit Molekulargewichten von ca. 3.000 und Jodzahlen von ca. 450. In EP 1785251 wird die Verwendung von Polyisobutylenen in Trennmitteln beschrieben.

Diese Trennmittel weisen einen öligen Charakter auf was dazu führt, dass sich die Oberfläche des Polyurethanformkörpers ölig anfühlt. Dies stellt nicht nur einen haptischen Mangel dar, sondern auch einen technischen, da die Oberflächen auch nur schlecht beklebbar sind, so können z. B. Sensoren nicht oder nur schlecht auf die entsprechenden Oberflächen der Polyurethanformkörper geklebt werden.

JP 3160980 B2 beschreibt ein Polyurethan mit einer ausgezeichneten Haftung auf verschiedenen Kunststofffolien und offenbart in diesem Kontext eine Zusammensetzung, welche OH-funktionelles Polybutadien und mindestens ein Lösungsmittel aufweist.

US 5919976 beschreibt ein Verfahren zum Einbau von Sulfonsäuregruppen in die Struktur einer aliphatischen, unpolaren, wasserunlöslichen Verbindung. In diesem Kontext wird eine Zusammensetzung, welche OH-funktionelles Polybutadien und mindestens ein Lösungsmittel aufweist, offenbart.

JP 2002 241691 A beschreibt ein Beschichtungsmittel für ein Polyolefin, das einen Film mit ausgezeichneter Haftung und Wasser- und Lösungsmittelbeständigkeit liefert. In diesem Kontext wird eine Zusammensetzung, welche OH-funktionelles Polybutadien und mindestens ein Lösungsmittel aufweist, offenbart.

DE 38 37 351 C1 beschreibt ein Verfahren zur Herstellung von Polyurethan- und/oder Polyharnstoffformkörpern mit gegebenenfalls zellförmigem Kern durch Umsetzung von mindestens einem Polyol bzw. einem Polyamin mit einem organischen Di- oder Polyisocyanat in Gegenwart von Katalysatoren, Trennmitteln und gegebenenfalls üblichen Zusatzmitteln, wie Vernetzern, Kettenverlängerungsmitteln, Treibmitteln, Stabilisatoren, Zellregulatoren, Pigmenten und Füllstoffen.

Aufgabe der vorliegenden Erfindung war deshalb die Bereitstellung eines Trennmittels, das einen oder mehrere der genannten Nachteile nicht aufweist. Insbesondere war Aufgabe der vorliegenden Erfindung die Bereitstellung eines Trennmittels, bei dessen Anwendung Polyurethanformkörper-Oberflächen erhalten werden, die beklebbar sind, und die trotzdem gute Trenneigenschaften aufweisen. Überraschenderweise wurde gefunden, dass diese Aufgabe gelöst werden kann, in dem Trennmittel eingesetzt werden, die OH-funktionelles Polybutadien aufweisen.

Gegenstand der vorliegenden Erfindung sind deshalb Zusammensetzungen gemäß Anspruch 1, die OH-funktionelles Polybutadien und Lösungsmittel aufweisen.

Ebenfalls Gegenstand der vorliegenden Erfindung ist die Verwendung der erfindungsgemäßen Zusammensetzungen als Trennmittel bei der Herstellung von Polyurethan-Formkörpern gemäß Anspruch 9 oder als Antiquietschmittel bei der Verarbeitung von Polyurethan-Formkörpern gemäß Anspruch 10.

Die erfindungsgemäßen Zusammensetzungen haben den Vorteil, dass bei Ihrer Verwendung als Trennmittel oder Antiquietschmittel bei der Herstellung oder Verarbeitung von Polyurethankörpern die Oberflächen der Polyurethan-Formkörper weiterhin beklebbar sind.

Ein weiterer Vorteil besteht darin, dass sich die Oberflächen der behandelten Polyurethanformkörper nicht so ölig anfühlen, wie Oberflächen, die mit nicht funktionalisiertem Polybutadien behandelt wurden.

Ein weiterer Vorteil besteht darin, dass von den trockenen Polyurethanformkörperoberflächen mittelbar oder unmittelbar keine öligen Bestandteile auf andere Oberflächen wie z.B. weitere Polyurethanformkörperoberflächen übertragen werden.

Die erfindungsgemäßen Zusammensetzungen, ein Verfahren zu deren Herstellung und die Verwendung der Zusammensetzung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Die erfindungsgemäße Zusammensetzung zeichnet sich dadurch aus, dass die Zusammensetzung OH-funktionelles Polybutadien und mindestens ein Lösungsmittel aufweist. Die Zusammensetzung kann zusätzlich ein oder mehrere Hilfs- oder Zusatzstoffe aufweisen, die von OH-funktionellem Polybutadien und Lösungsmittel verschieden sind.

Die erfindungsgemäße Zusammensetzung weist als OH-funktionelles Polybutadien vorzugsweise solches auf, welches eine OH-Zahl von 20 bis 75, bevorzugt 30 bis 65, besonders bevorzugt von 40 bis 60 und ganz besonders bevorzugt von 44 bis 55 aufweist. Die Bestimmung der OH-Zahl erfolgt In Anlehnung an die Vorschrift DGF C-V 17a (Deutsche Gesellschaft für Fettwissenschaft e.V.) wie folgt:
Die OH-Zahl bzw. Hydroxylzahl (OHZ) gibt die Anzahl Milligramm Kaliumhydroxid an, die notwendig ist, um die von einem Gramm OH-funktionellem Polybutadien bei Acetylierung verbrauchte Essigsäure zu neutralisieren. Hydroxylgruppen werden durch Essigsäureanhydrid in Gegenwart von Pyridin acetyliert. Dabei entsteht pro Hydroxylgruppe ein Molekül Essigsäure, während die anschließende Hydrolyse des Essigsäureanhydrids zwei Moleküle Essigsäure liefert. 4-(Dimethylamino)-pyridin beschleunigt die Acetylierung. Der Wassergehalt des Produkts sollte 2 Gew.-% nicht überschreiten. Störungen: Primäre und sekundäre Amine werden miterfasst.

Material und Reagenzien

- Wasserbad 60 °C
- Kolben 250 ml mit Schraubverschluss
- Analysenwaage, 0,001 g
- Pyridin zur Analyse
- Essigsäureanhydrid zur Analyse
- 4-(Dimethylamino)-pyridin zur Synthese
- Phenolphthalein zur Analyse
- Acetylierungsgemisch: 125 g Essigsäureanhydrid werden in einem 1000 ml Meßkolben mit Pyridin bis zur Marke aufgefüllt.
- Katalysatorlösung: 4-(Dimethylamino)-pyridin 5 %ig m/V in Pyridin
- Natronlauge 0.5 N
- Phenolphthalein 1 %ig ethanolisch

Durchführung: Eine geeignete Probenmenge wird in einen 250 ml Erlenmeyerkolben mit Schraubverschluß eingewogen und mit 10,0 ml Acetylierungsgemisch und 0,4 ml Katalysatorlösung versetzt. Der Kolben wird verschlossen und 10 Minuten im Wasserbad bei 60 °C erwärmt. Man gibt 50 ml dest. Wasser dazu und titriert mit 0,5 N Natronlauge gegen Phenolphthalein bis zum Endpunkt. Unter den gleichen Bedingungen, jedoch ohne Probe, wird ein Blindversuch durchgeführt.

Die Auswertung erfolgt wie folgt:

$$\frac{(b - a) \times 28{,}05}{E} = \text{Hydroxylzahl (OHZ) [mg KOH/g]}$$

b = Verbrauch 0,5 N NaOH im Blindversuch (ml)
a = Verbrauch 0,5 N NaOH im Hauptversuch (ml)
E = Einwaage Probe (g)

Die OH-Zahl muss durch die Säurezahl bzw. die Alkalität korrigiert werden. Die Säurezahl muss addiert, die Alkalität muss subtrahiert werden.

Der Verbrauch im Hauptversuch muss unter 25 % des Blindversuches liegen, damit eine ausreichende Acetylierung gewährleistet ist.

Die Bestimmung der Säurezahl z.B. kann in Anlehnung an

DGF C-V 2
Ph.Eur. 2.5.1
ISO 3682
ASTM D 974 oder
DIN EN ISO 2114

erfolgen.

Die Bestimmung der Säurezahl erfolgt vorzugsweise in der nachfolgend beschriebenen Weise:

1. Begriffe / Definitionen

Die Säurezahl (SZ) gibt die Anzahl mg KOH an, die notwendig ist, um die in 1g Produkt enthaltenen freien Säuren zu neutralisieren.

2. Prinzip und Anwendungsbereich

Die Probe wird in einem geeigneten Lösungsmittel gelöst und die anwesenden Säuren mit Kalilauge titriert. Da sie völlig unspezifisch ist, erlaubt sie es nicht, zwischen Mineralsäuren, freien und gebundenen Fettsäuren und anderen organischen Säuren zu unterscheiden. Sie erfasst daher auch etwa anwesende Mineralsäuren, die nach DGF C-III 14 gesondert bestimmt werden können.

3. Störungen nicht belegt

4. Material und Reagenzien

Lösungsmittel : Ethanol / Toluol Mischung 1:1 (v/v) (neutralisiert gegen Phenolphthalein)
0,5 N Kalilauge in Ethanol (ca. 80 Vol. %)
Phenolphthaleinlösung, 1 % ig in Ethanol
Erlenmeyerkolben 300 ml
geeignete Titrationsgeräte z.B. Metrohm Dosimat 725 oder entsprechende Büretten
Magnetrührkern (4 cm)
Heizplatte mit Rührwerk (z.B. IKA)
Analysenwaage

5. Durchführung

Die zu untersuchende Probe wird 8g (+/-0,01) genau in den Erlenmeyerkolben eingewogen. Ca. 100 ml des neutralisierten Lösungsmittels und ein Magnetrührkern hinzugeben. Anschließend wird die Probe, unter "starken" -rühren bis zum Sieden erwärmt. Das Produkt löst sich nicht vollständig >>> es entsteht eine Dispersion (Die Pelletsstruktur muss aufgelöst sein)!

Nach Zusatz von Phenolphtaleinlösung wird unter ständigem Rühren mit Magnetrührkern gegen Kalilauge "langsam" bis zum bleibenden (mindestens 60s stabil) Farbumschlag titriert.

6. Auswertung

$$\text{Säurezahl [mg KOH/g]} = \frac{V \times 56.1 \times N}{E}$$

$$\text{Freie Fettsäure [\%]} = \frac{V \times MG \times N}{10 \times E}$$

V = Verbrauch Titrant (ml)
N = Normalität Titrant
E = Einwaage Probe (g)
MG = Molgewicht der Fettsäure

Die Bestimmung der Alkalität / des Alkaligehalts erfolgt vorzugsweise in der nachfolgend beschriebenen Weise:

1. Prinzip und Anwendungsbereich

Die Alkalität und der Alkaligehalt wird durch Titration mit Standardsäure bestimmt

2. Störungen nicht belegt

3. Material und Reagenzien

- Analysenwaage 0,001 g
- Erlenmeyerkolben 300 ml
- Ethanol
- dest. Wasser
- Salzsäure 0,1 N
- Phenolphthalein
- Phenolphthaleinlösung, 1 % ig in Ethanol

4. Durchführung

Eine geeignete Einwaage wird in einen Erlenmeyerkolben eingewogen, bei Alkalitäten wird in ca. 100 ml Ethanol und bei Alkalisalzen und deren Lösungen in dest. Wasser gelöst. Die Lösung wird mit Salzsäure gegen Phenolphthalein bis zum Farbumschlag von rosa auf farblos titriert.

5. Auswertung

$$\frac{V \times 56{,}1 \times 0{,}1 \times f}{E} = \text{Alkalität [mg KOH/g]}$$

$$\frac{V \times MW \times 0{,}1 \times f \times 100}{1000 \times E} = \text{Alkaligehalt [\%]}$$

V = Verbrauch Titrant (ml)
E = Einwaage Probe (g)
f = Faktor Titrant
MW = Molgewicht

Bevorzugt weist die erfindungsgemäße Zusammensetzung als OH-funktionelles Polybutadien Verbindungen der Formel (I)

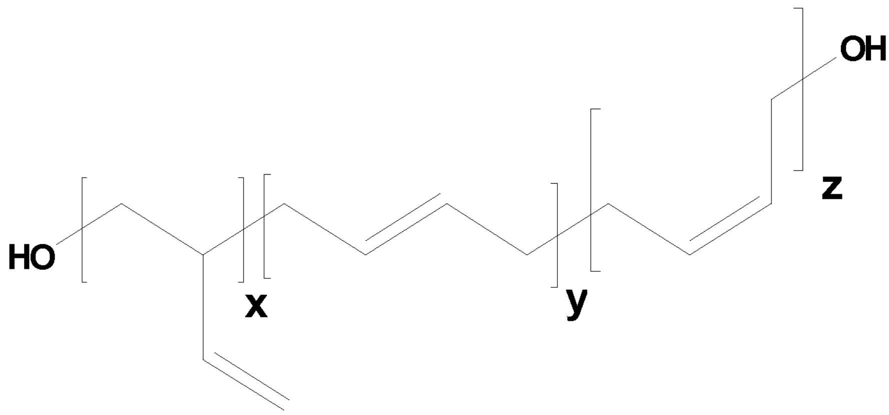

auf, wobei die Einheiten mit dem Index x einen mittleren molaren Anteil an der Summe der Anteile mit den Indices x, y und z von 17 bis 27 % aufweisen, die Einheiten mit dem Index y einen mittleren molaren Anteil an der Summe der Anteile mit den Indices x, y und z von 53 bis 63 % aufweisen und die Einheiten mit dem Index z einen mittleren molaren Anteil an der Summe der Anteile mit den Indices x, y und z von 15 bis 25 % aufweisen. Besonders bevorzugt weist die erfindungsgemäße Zusammensetzung als OH-funktionelles Polybutadien Verbindungen der Formel (I) auf, die eine OH-Zahl von 20 bis 75, bevorzugt 30 bis 65, besonders bevorzugt von 40 bis 60 und ganz besonders bevorzugt von 44 bis 55 aufweisen.

Es kann vorteilhaft sein, wenn das in der Zusammensetzung enthaltene OH-funktionelle Polybutadien eine gewichtsmittlere Molmasse von größer 200 g/mol, vorzugsweise größer 1000 g/mol und besonders bevorzugt von 2000 bis 6000 g/mol aufweist. Die gewichtsmittlere Molmasse wird bestimmt gemäß DIN 55627-1 (GPC mit Styrol-Standard).

Ganz besonders bevorzugt weist die erfindungsgemäße Zusammensetzung als OH-funktionelles Polybutadien Verbindungen der Formel (I) auf, die eine OH-Zahl von 20 bis 75, bevorzugt 30 bis 65, besonders bevorzugt von 40 bis 60 und ganz besonders bevorzugt von 44 bis 55 und eine gewichtsmittlere Molmasse von größer 200 g/mol, vorzugsweise größer 1000 g/mol und besonders bevorzugt von3000 bis 3500 g/mol aufweisen.

Geeignetes OH-funktionelles Polybutadien kann z. B. wie in EP 2492292 beschrieben hergestellt werden. Geeignetes OH-funktionelles Polybutadien kann aber auch von der Evonik Industries AG, unter der Bezeichnung Polyvest EP HT erhalten werden.

Die erfindungsgemäßen Zusammensetzungen enthalten, bezogen auf die Gesamtzusammensetzung der Zusammensetzung,

A) 0,5 bis 40 Gew.-% OH-funktionelles Polybutadien,
B) 0,0 bis 30 Gew.-% mindestens eines von A verschiedenen trennaktiven Mittels ausgesucht aus der Gruppe Seifen, Öle, Wachse und Silicone,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,0 bis 5 Gew.-% Viskositätsmodifizierer,
G) 0,1 bis 2 Gew.-% Additive, vorzugsweise ausgewählt aus der Gruppe umfassend Zellöffner, Konservierungsmittel, Bakterizide, Fungizide und Antioxidantien und
H) ad 100 Gew.-% Lösungsmittel.

Besonders bevorzugt enthalten die erfindungsgemäßen Zusammensetzungen, bezogen auf die Gesamtzusammensetzung der Zusammensetzung,

A) 0,5 bis 40 Gew.-% OH-funktionelles Polybutadien,
B) 0,0 bis 1 Gew.-% mindestens eines von A verschiedenen trennaktiven Mittels ausgesucht aus der Gruppe Seifen, Öle, Wachse und Silicone,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% Additive, vorzugsweise ausgewählt aus der Gruppe umfassend Zellöffner, Konservierungsmittel, Bakterizide, Fungizide und Antioxidantien und
H) ad 100 Gew.-% Lösungsmittel.

Als Lösungsmittel können die erfindungsgemäßen Zusammensetzungen Wasser und/oder ein organisches Lösungsmittel aufweisen. Vorzugsweise weisen die erfindungsgemäßen Zusammensetzungen Wasser oder ein organisches Lösungsmittel auf.

In einer bevorzugten Ausführungsform ist das Lösungsmittel in der erfindungsgemäßen Zusammensetzungen Wasser. Bei dieser Ausführungsform ist besonders bevorzugt, wenn die Zusammensetzung frei ist von organischen Lösungsmitteln, insbesondere den nachfolgend definierten organischen Lösungsmitteln.

In einer weiteren bevorzugten Ausführungsform der vorliegenden Erfindung ist das Lösungsmittel ein organisches Lösungsmittel. Vorzugsweise weist die Zusammensetzung bei dieser Ausführungsform einen Gehalt an Wasser von kleiner 5 Gew.-%, bevorzugt kleiner 1 Gew.-% und besonders bevorzugt kleiner 0,1 Gew.-% bezogen auf die Zusammensetzung auf.

Ist das Lösungsmittel ein organisches Lösungsmittel, so ist dieses vorzugsweise ausgewählt aus organischen Lösungsmitteln, bevorzugt Kohlenwasserstoffen mit einer Siedetemperatur von 25 bis 280 °C, bevorzugt 80 bis 200 °C. Vorzugsweise weisen die organischen Lösungsmittel, bevorzugt Kohlenwasserstoffe außerdem einen Flammpunkt von > 22 °C, besonders bevorzugt von > 55 °C auf.

Bevorzugt weist die erfindungsgemäße Zusammensetzung als Kohlenwasserstoffe hochraffiniertes Mineralöl auf, welches z. B. aus naphthenischen, aromatischen und/oder paraffinischen Kohlenwasserstoffen zusammengesetzt sein kann. Bevorzugt zeigt der eingesetzte Kohlenwasserstoff eine kinematische Viskosität bei 40 °C nach DIN 51 562 T.1 zwischen 10 und 150 mm2/s, bevorzugt von 20 bis 100 mm2/s. Im Markt erhältlich sind geeignete Kohlenwasserstoffe z. B. unter den Markennamen Gravex®, Deutsche Shell AG, oder Pionier®, Hansen & Rosenthal KG.

Beispiele für besonders geeignete organisches Lösungsmittel sind Spezialbenzin 100/140, Shellsol® D 40 der Deutschen Shell AG, Exxsol® D 40 der Firma Exxon, Isoparaffine wie etwa Mischungen aus Isoundecan und Isododecan (Isopar® H) der Firma Exxon..

Als von A) verschiedenes trennaktives Mittel B) können beispielsweise folgende Substanzen in der erfindungsgemäßen Zusammensetzung vorhanden sein: Wachse, d. h. flüssige, feste, natürliche oder synthetische Wachse, auch oxidiert und/oder teilverseift, Ester von Carbonsäuren mit Alkoholen oder Fettalkoholen, Alkali- oder Erdalkalimetallsalze von Fettsäuren, gegebenenfalls aber nicht bevorzugt, unter Mitverwendung ungesättigter oligomere und/oder polymerer Kohlenwasserstoffe, Silicone, wie Polydimethylsiloxane, gegebenenfalls substituiert mit aliphatischen oder aromatischen Kohlenwasserstoffresten. Bevorzugte von A) verschiedene trennaktive Mittel B) sind insbesondere Polybutadiene, die nicht OH-funktionell sind. Solche Polybutadiene sind z. B. unter der Bezeichnung Polyvest 130 bei der Firma Evonik Industries AG zu beziehen. Besonders bevorzugte erfindungsgemäße Zusammensetzungen sind solche, die eine oder mehrere Komponente(n) B) enthalten. Vorzugsweise beträgt der Anteil der Komponenten B) bezogen auf die Gesamtzusammensetzung der Zusammensetzung von 0,1 bis 30 Gew.-%, bevorzugt 5 bis 25 Gew.-%.

Als Emulgatoren C) können in den erfindungsgemäßen Zusammensetzungen z. B. anionische Emulgatoren wie z. B. Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren, wie z. B. ethoxylierte Fettalkohole, ethoxylierte Oxoalkohole und andere Alkoholether, Fettamine, wie z. B. Dimethylalkylamine, Fettsäurealkanolamide, Fettsäureester mit Alkoholen, wie z. B. Glycerinester, Polyglycerinester oder Sorbitolester; kationische Emulgatoren, wie z. B. sauer gestellte Alkyldimethylamine oder quaternäre Stickstoffverbindungen oder zwitterionische Tenside, oder silikonhaltige Verbindungen, wie z.B. Polyethersiloxane, vorhanden sein. Die Summe der Emulgatoren in der erfindungsgemäßen Zusammensetzung beträgt vorzugsweise 0,1 bis 10 Gew.-%, bevorzugt 0,5 bis 6 Gew.-% bezogen auf die erfindungsgemäße Zusammensetzung.

Als Katalysatoren D) können alle bekannten, die Polyurethanreaktion katalysierenden Katalysatoren in der erfindungsgemäßen Zusammensetzung vorhanden sein, wie z. B. Lewis Säuren, wie organische Zinn- oder Bismut-Verbindungen oder Salze oder Lewis Basen, wie tertiäre Amine. Bevorzugt wird in den erfindungsgemäßen Zusammensetzungen als Katalysator D) ein Bismut aufweisender Katalysator, besonders bevorzugt Bi(III)octoat, Bi(III)isononat oder Bi(III)neodecanoat verwendet.

Als Schaumstabilisatoren E) können die im Stand der Technik bekannten Stabilisatoren in der erfindungsgemäßen Zusammensetzung vorhanden sein. Bevorzugte Schaumstabilisatoren sind z.B. Polysiloxan-Polyether-Copolymerisate, Talkum, Verdickungsmittel oder Kieselsäure. Die Summe der Schaumstbilisatoren in der erfindungsgemäßen Zusammensetzung beträgt vorzugsweise 0,1 bis 5 Gew.-%, bevorzugt 2 bis 2,5 Gew.-% bezogen auf die erfindungsgemäße Zusammensetzung.

Als Viskositätsmodifizierer F) können die im Stand der Technik bekannten Viskositätsmodifizierer in der erfindungsgemäßen Zusammensetzung vorhanden sein. Vorzugsweise weist die erfindungsgemäße Zusammensetzung als Viskositätsmodifizierer zum Beispiel als Carbomere bezeichnete Polyacrylsäurederivate oder andere Polyelektrolytverdicker, wie wasserlösliche Cellulosederivate oder auch Xanthan Gum auf.

Als Additive G) können die im Stand der Technik bekannten Additive in den erfindungsgemäßen Zusammensetzungen vorhanden sein, wie z.B. das Biocid Acticide MBS der Fa. Thor, oder aus dem Stand der Technik bekannte Zellöffner.

Die erfindungsgemäße Zusammensetzung kann als Trennmittel bei der Herstellung von Polyurethan-Formkörpern, insbesondere Polyurethanschaumkörpern verwendet werden. Die erfindungsgemäße Zusammensetzung kann dabei als internes Trennmittel oder als externes Trennmittel eingesetzt werden. Vorzugsweise wird die erfindungsgemäße Zusammensetzung als externes Trennmittel eingesetzt. Unter internen Trennmitteln werden solche verstanden, die der Reaktionsmischung, aus der der Formkörper hergestellt wird, vor dem Formgebungsverfahren zugesetzt wird. Unter externen Trennmitteln werden solche verstanden, die auf das Formgebungswerkzeug aufgetragen werden.

Vorzugsweise wird bei der Formkörperherstellung die Form auf die gewünschte Formtemperatur von 45 bis 80 °C, bevorzugt 50 bis 75 °C, gebracht, mit der erfindungsgemäßen Zusammensetzung als Trennmittel eingesprüht, eine gewisse Zeit - je nach Wasseranteil ca. 0,5 bis 2,5 Minuten - gewartet, bis die größte Menge Wasser verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

Die erfindungsgemäße Zusammensetzung kann auch als Antiquietschmittel bei der Verarbeitung von Polyurethan-Formkörpern, insbesondere Polyurethanschaumkörpern, eingesetzt werden. Dabei wird die Zusammensetzung nach dem Entformen des Polyurethanformkörpers auf die Oberflächen der Polyurethanformkörpers aufgebracht, die mit anderen Materialien, insbesondere metallischen Materialien in Kontakt kommen. Das Aufbringen kann z. B. durch Sprühen oder Streichen erfolgen.

In den nachfolgenden Beispielen wird die vorliegende Erfindung näher erläutert, ohne dass die Erfindung auf die in den Beispielen beschriebenen Ausführungsformen beschränkt sein soll.

**Beispiele:**

**Liste der eingesetzten Substanzen:**

- Polyvest 130 = Polybutadien der Firma Evonik Industries AG
- Polyvest EP HT = OH-funktionelles Polybutadien der Firma Evonik Industries AG
- Lithene Ultra N4-9000 = Polymer der Firma Synthomer plc
- Genamin SH 100D = 1-Stearylamin der Firma TER HELL & CO. GMBH
- WACKER L 051 SILICONÖL = Polysiloxan der Firma Wacker Chemie AG
- Niax SC 240 = Polysiloxan der Firma Momentive
- 60%-ige Essigsäure der Firma BCD Chemie
- Demineralisiertes Wasser der Firma Reher + Ramsden
- BNT cat 422 = Dibutyl-zinn-dilaurat de Firma BNT Chemicals
- Genamin 16R 302D = N,N- Dimethyl-Hexadecylamin der Firma TER HELL & CO. GMBH
- Acticide MBS = Mischung aus 2-Methyl-2H-isothiazol-3-on und 1,2-Benzisothiazol-3(2H)-on der Firma Thor Specialties, Inc.

**Trennmittel 1 (Vergleichsbeispiel):**

345g Polyvest 130, 85g Lithene Ultra N4-9000 und 40g Genamin SH 100D wurden in einem Becherglas vorgelegt und unter Rühren auf 80°C erwärmt, danach wurden 6g Essigsäure zugegeben und 5 Minuten weitergerührt. Anschließen wurden langsam 501,7g Wasser zugegeben. Abschließend wurden 4,5g Wacker-Silikon L051, 2,8g BNT

cat 422, 10g Genamin 16R 302D und 5g Niax SC 240 unter Rühren zugegeben.

**Trennmittel 2 (erfindungsgemäß):**

430g Polyvest EP HT und 40g Genamin SH 100D wurden in einem Becherglas vorgelegt und unter Rühren auf 80°C erwärmt, danach wurden 6g Essigsäure zugegeben und 5 Minuten weitergerührt. Anschließen wurden langsam 501,7g Wasser zugegeben. Abschließend wurden 4,5g Wacker-Silikon L051, 2,8g BNT cat 422, 10g Genamin 16R 302D und 5g Niax SC 240 unter Rühren zugegeben.

**Trennmittel 3 (erfindungsgemäß):**

215g Polyvest EP HT; 172,5g Polyvest 130, 42,5g Lithene Ultra N4-9000 und 40g Genamin SH 100D wurden in einem Becherglas vorgelegt und unter Rühren auf 80°C erwärmt, danach wurden 6g Essigsäure zugegeben und 5 Minuten weitergerührt. Anschließen wurden langsam 501,7g Wasser zugegeben. Abschließend werden 4,5g Wacker-Silikon L051, 2,8g BNT cat 422, 10g Genamin 16R 302D und 5g Niax SC 240 unter Rühren zugegeben.

**Trennmittelversuche:**

Die im Volumenverhältnis 1:4 (Trennmittel:Wasser) verdünnten Trennmittel wurden mittels einer Sprühpistole Pilot Mini der Fa. Walther Pilot mit einer 0,5 mm Düse in praxisnahen Mengen von 20 g/$m^2$ in eine Kastenform gesprüht und ein schäumbares Polyurethansystem bestehend aus 100 Teilen Desmophen® PU 21IK01, 3,5 Teilen Wasser, 0,4 Teilen Tegoamin® TA 33, 0,25 Teilen Tegoamin® AS-1, 0,7 Teilen Diethanolamin, 0,5 Teilen Tegostab® EP-K-38, 0,2 Teilen Essigsäure (60 % in Wasser), 63,5 Teilen Suprasec® 2412 in dieser Kastenform bei 55 °C aufgeschäumt.

Nach dem Aushärten (10 Minuten) wurden die Schaumstücke aus der Kastenform genommen und die Rückstände auf den Schaumstücken (Kissenrückstand) und in der Kastenform (Formrückstand) haptisch bewertet. Die Ergebnisse der Trennmittelversuche sind in Tabelle 1 wiedergegeben.

Tabelle 1: Ergebnisse der Trennmittelversuche:

| Trennmittel | Kissenrückstand | Formrückstand |
|---|---|---|
| 1 | stark ölig u. stark klebrig | fester transparenter Film schwierig zu reinigen |
| 2 | trocken | trocken |
| 3 | leicht ölig | leicht ölig |

Wie der Tabelle 1 entnommen werden kann, resultiert aus der Verwendung der erfindungsgemäßen Trennmittel (2 und 3) eine deutlich geringere Öligkeit als bei der Verwendung des Trennmittels 1.

## Patentansprüche

1. Zusammensetzung, wobei die Zusammensetzung OH-funktionelles Polybutadien und mindestens ein Lösungsmittel aufweist, **dadurch gekennzeichnet, dass** die Zusammensetzung bezogen auf die Gesamtzusammensetzung

    A) 0,5 bis 40 Gew.-% OH-funktionelles Polybutadien,
    B) 0,0 bis 30 Gew.-% mindestens eines von A verschiedenen trennaktiven Mittels ausgesucht aus der Gruppe Seifen, Öle, Wachse und Silicone,
    C) 0,1 bis 10 Gew.-% Emulgatoren,
    D) 0,1 bis 5 Gew.-% Katalysatoren,
    E) 0,1 bis 5 Gew.-% Schaumstabilisatoren,
    F) 0,0 bis 5 Gew.-% Viskositätsmodifizierer,
    G) 0,1 bis 2 Gew.-% Additive, vorzugsweise ausgewählt aus der Gruppe umfassend Zellöffner, Konservierungsmittel, Bakterizide, Fungizide und Antioxidantien und
    H) ad 100 Gew.-% Lösungsmittel,

    enthält.

2. Zusammensetzung nach Anspruch 1, **dadurch gekennzeichnet, dass** die Zusammensetzung als OH-funktionelles Polybutadien solches aufweist, das eine OH-Zahl von 20 bis 75, bevorzugt 30 bis 65, besonders bevorzugt von 40 bis 60 und ganz besonders bevorzugt von 44 bis 55 aufweist.

3. Zusammensetzung nach Anspruch 1 oder 2, **dadurch gekennzeichnet, dass** die Zusammensetzung als OH-funktionelles Polybutadien Verbindungen der Formel (I)

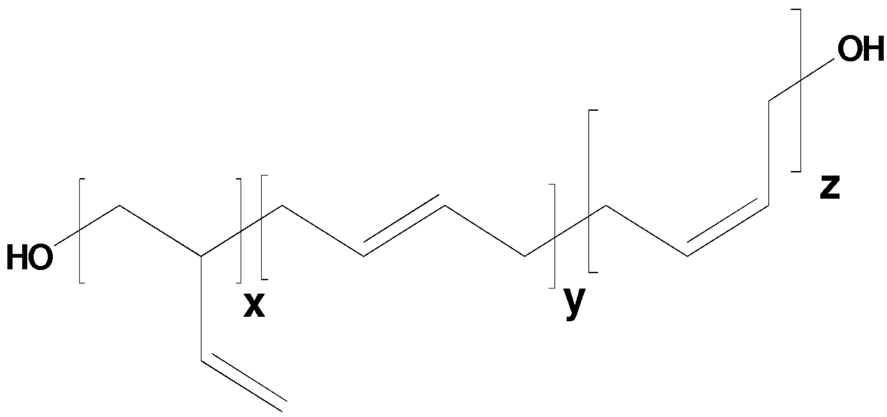

aufweist, wobei die Einheiten mit dem Index x einen mittleren molaren Anteil an der Summe der Anteile mit den Indices x, y und z von 17 bis 27 % aufweisen, die Einheiten mit dem Index y einen mittleren molaren Anteil an der Summe der Anteile mit den Indices x, y und z von 53 bis 63 % aufweisen und die Einheiten mit dem Index z einen mittleren molaren Anteil an der Summe der Anteile mit den Indices x, y und z von 15 bis 25 % aufweisen.

4. Zusammensetzung nach mindestens einem der Ansprüche 1 bis 3, **dadurch gekennzeichnet, dass** die Zusammensetzung bezogen auf die Gesamtzusammensetzung

A) 0,5 bis 40 Gew.-% OH-funktionelles Polybutadien,
B) 0,0 bis 30 Gew.-% mindestens eines von A verschiedenen trennaktiven Mittels ausgesucht aus der Gruppe Seifen, Öle, Wachse und Silicone,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% Additive, vorzugsweise ausgewählt aus der Gruppe umfassend Zellöffner, Konservierungsmittel, Bakterizide, Fungizide und Antioxidantien und
H) ad 100 Gew.-% Lösungsmittel,

enthält.

5. Zusammensetzung gemäß mindestens einem der Ansprüche 1 bis 4, **dadurch gekennzeichnet, dass** das Lösungsmittel Wasser ist.

6. Zusammensetzung gemäß mindestens einem der Ansprüche 1 bis 4, **dadurch gekennzeichnet, dass** das Lösungsmittel ausgewählt ist aus Kohlenwasserstoffen mit einer Siedetemperatur von 25 bis 280 °C, bevorzugt 80 bis 200 °C, bevorzugt mit Flammpunkten > 22 °C, besonders bevorzugt > 55 °C.

7. Zusammensetzung gemäß mindestens einem der Ansprüche 1 bis 6, **dadurch gekennzeichnet, dass** das OH-funktionelle Polybutadien eine gewichtsmittlere Molmasse von größer 200 g/mol, vorzugsweise größer 1000 g/mol und besonders bevorzugt von 2000 bis 6000 g/mol aufweist.

8. Zusammensetzung gemäß mindestens einem der Ansprüche 1 bis 7, **dadurch gekennzeichnet, dass** die Zusammensetzung einen Katalysator D) aufweist und als Katalysator D) ein Bismut aufweisender Katalysator verwendet wird.

**9.** Verwendung einer Zusammensetzung gemäß mindestens einem der Ansprüche 1 bis 8 als Trennmittel bei der Herstellung von Polyurethan-Formkörpern.

**10.** Verwendung einer Zusammensetzung gemäß mindestens einem der Ansprüche 1 bis 8 als Antiquietschmittel bei der Verarbeitung von Polyurethan-Formkörpern.

**11.** Verwendung nach einem der Ansprüche 9 oder 10, **dadurch gekennzeichnet, dass** der Polyurethan-Formkörper ein Polyurethanschaum-Formkörper ist.

## Claims

**1.** Composition, wherein the composition comprises OH-functional polybutadiene and at least one solvent, **characterized in that** based on the overall constitution of the composition the composition comprises

A) 0.5 to 40 wt% of OH-functional polybutadiene,
B) 0.0 to 30 wt% of at least one release-active agent distinct from A and selected from the group of soaps, oils, waxes and silicones,
C) 0.1 to 10 wt% of emulsifiers,
D) 0.1 to 5 wt% of catalysts,
E) 0.1 to 5 wt% of foam stabilizers,
F) 0.0 to 5 wt% of viscosity modifiers,
G) 0.1 to 2 wt% of additives, preferably selected from the group comprising cell openers, preservatives, bactericides, fungicides and antioxidants and
H) solvent ad 100 wt%.

**2.** Composition according to Claim 1, **characterized in that** as OH-functional polybutadiene the composition comprises OH-functional polybutadiene having an OH number of 20 to 75, preferably 30 to 65, particularly preferably of 40 to 60 and very particularly preferably of 44 to 55.

**3.** Composition according to Claim 1 or 2, **characterized in that** as OH-functional polybutadiene the composition comprises compounds of formula (I),

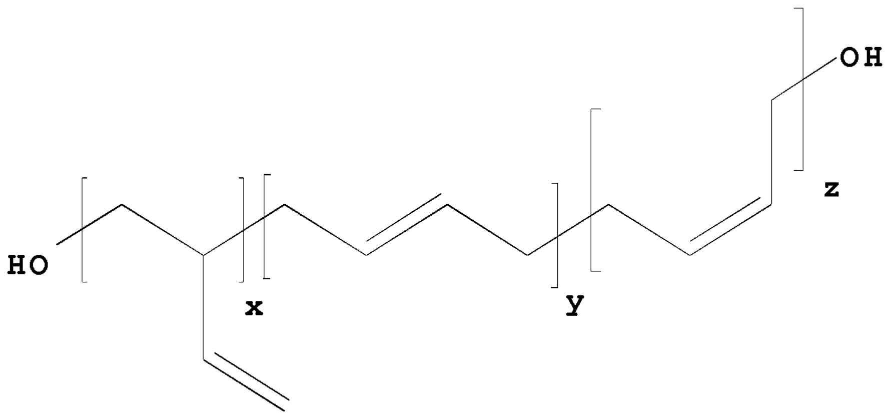

wherein the units having the index x are present in an average molar fraction based on the sum of the fractions having the indices x, y and z of 17% to 27%, the units having the index y are present in an average molar fraction based on the sum of the fractions having the indices x, y and z of 53% to 63% and the units having the index z are present in an average molar fraction based on the sum of the fractions having the indices x, y and z of 15% to 25%.

**4.** Composition according to at least one of Claims 1 to 3, **characterized in that** based on the overall constitution of the composition the composition comprises

A) 0.5 to 40 wt% of OH-functional polybutadiene,
B) 0.0 to 30 wt% of at least one release-active agent distinct from A and selected from the group of soaps, oils,

waxes and silicones,
C) 0.1 to 10 wt% of emulsifiers,
D) 0.1 to 5 wt% of catalysts,
E) 0.1 to 5 wt% of foam stabilizers,
F) 0.1 to 5 wt% of viscosity modifiers,
G) 0.1 to 2 wt% of additives, preferably selected from the group comprising cell openers, preservatives, bactericides, fungicides and antioxidants and
H) solvent ad 100 wt%.

**5.** Composition according to at least one of Claims 1 to 4, **characterized in that** the solvent is water.

**6.** Composition according to at least one of Claims 1 to 4, **characterized in that** the solvent is selected from hydrocarbons having a boiling point of 25°C to 280°C, preferably 80°C to 200°C, preferably with flash points >22°C, particularly preferably > 55°C.

**7.** Composition according to at least one of Claims 1 to 6, **characterized in that** the OH-functional polybutadiene has a weight-average molar mass of greater than 200 g/mol, preferably greater than 1000 g/mol and particularly preferably of 2000 to 6000 g/mol.

**8.** Composition according to at least one of Claims 1 to 7, **characterized in that** the composition comprises a catalyst D) and a bismuth-comprising catalyst is used as catalyst D).

**9.** Use of a composition according to at least one of Claims 1 to 8 as a release agent in the production of moulded polyurethane articles.

**10.** Use of a composition according to at least one of Claims 1 to 8 as an antisquawk agent in the processing of moulded polyurethane articles.

**11.** Use according to either of Claims 9 and 10, **characterized in that** the moulded polyurethane article is a moulded polyurethane foam article.

**Revendications**

**1.** Composition, la composition comprenant du polybutadiène à fonction OH et au moins un solvant, **caractérisée en ce que** la composition contient, par rapport à la composition totale :

A) 0,5 à 40 % en poids de polybutadiène à fonction OH,
B) 0,0 à 30 % en poids d'au moins un agent à activité de séparation différent de A, choisi dans le groupe constitué par les savons, les huiles, les cires et les silicones,
C) 0,1 à 10 % en poids d'émulsifiants,
D) 0,1 à 5 % en poids de catalyseurs,
E) 0,1 à 5 % en poids de stabilisateurs de mousse,
F) 0,0 à 5 % en poids de modificateurs de viscosité,
G) 0,1 à 2 % en poids d'additifs, de préférence choisis dans le groupe comprenant les agents d'ouverture cellulaire, les conservateurs, les bactéricides, les fongicides et les antioxydants, et
H) jusqu'à 100 % en poids de solvant.

**2.** Composition selon la revendication 1, **caractérisée en ce que** la composition comprend en tant que polybutadiène à fonction OH un qui présente un indice OH de 20 à 75, de préférence de 30 à 65, de manière particulièrement préférée de 40 à 60, et de manière tout particulièrement préférée de 44 à 55.

**3.** Composition selon la revendication 1 ou 2, **caractérisée en ce que** la composition comprend en tant que polybutadiène à fonction OH des composés de formule (I)

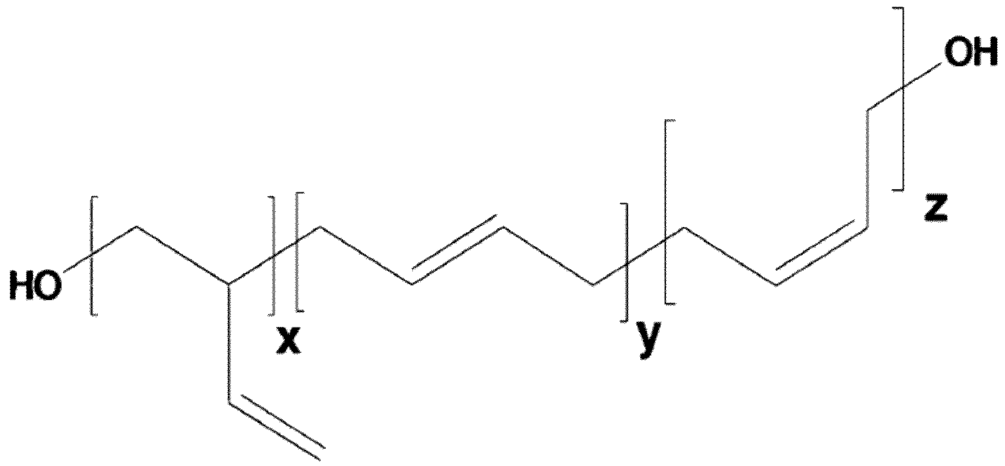

dans laquelle les unités munies de l'indice x présentent une proportion molaire moyenne par rapport à la somme des proportions munies des indices x, y et z de 17 à 27 %, les unités munies de l'indice y présentent une proportion molaire moyenne par rapport à la somme des proportions munies des indices x, y et z de 53 à 63 %, et les unités munies de l'indice z présentent une proportion molaire moyenne par rapport à la somme des proportions munies des indices x, y et z de 15 à 25 %.

**4.** Composition selon au moins l'une quelconque des revendications 1 à 3, **caractérisée en ce que** la composition contient, par rapport à la composition totale :

A) 0,5 à 40 % en poids de polybutadiène à fonction OH,
B) 0,0 à 30 % en poids d'au moins un agent à activité de séparation différent de A, choisi dans le groupe constitué par les savons, les huiles, les cires et les silicones,
C) 0,1 à 10 % en poids d'émulsifiants,
D) 0,1 à 5 % en poids de catalyseurs,
E) 0,1 à 5 % en poids de stabilisateurs de mousse,
F) 0,1 à 5 % en poids de modificateurs de viscosité,
G) 0,1 à 2 % en poids d'additifs, de préférence choisis dans le groupe comprenant les agents d'ouverture cellulaire, les conservateurs, les bactéricides, les fongicides et les antioxydants, et
H) jusqu'à 100 % en poids de solvant.

**5.** Composition selon au moins l'une quelconque des revendications 1 à 4, **caractérisée en ce que** le solvant est l'eau.

**6.** Composition selon au moins l'une quelconque des revendications 1 à 4, **caractérisée en ce que** le solvant est choisi parmi les hydrocarbures ayant une température d'ébullition de 25 à 280 °C, de préférence de 80 à 200 °C, de préférence ayant des points de flamme > 22 °C, de manière particulièrement préférée > 55 °C.

**7.** Composition selon au moins l'une quelconque des revendications 1 à 6, **caractérisée en ce que** le polybutadiène à fonction OH présente une masse molaire moyenne en poids supérieure à 200 g/mol, de préférence supérieure à 1 000 g/mol et de manière particulièrement préférée de 2 000 à 6 000 g/mol.

**8.** Composition selon au moins l'une quelconque des revendications 1 à 7, **caractérisée en ce que** la composition comprend un catalyseur D) et un catalyseur comprenant du bismuth est utilisé en tant que catalyseur D).

**9.** Utilisation d'une composition selon au moins l'une quelconque des revendications 1 à 8 en tant qu'agent de démoulage lors de la fabrication de corps moulés de polyuréthane.

**10.** Utilisation d'une composition selon au moins l'une quelconque des revendications 1 à 8 en tant qu'agent anti-grincement lors de l'usinage de corps moulés de polyuréthane.

**11.** Utilisation selon l'une quelconque des revendications 9 ou 10, **caractérisée en ce que** le corps moulé de polyuréthane est un corps moulé en une mousse de polyuréthane.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3742370 A
- DE 4020036 A
- EP 1785251 A
- JP 3160980 B
- US 5919976 A
- JP 2002241691 A
- DE 3837351 C1
- EP 2492292 A